# EUROPÄISCHE PATENTSCHRIFT

(11) **EP 1 143 228 B1**
(45) Veröffentlichungstag und Bekanntmachung des Hinweises auf die Patenterteilung: **14.12.2005**
(21) Anmeldenummer: 01100529.5
(22) Anmeldetag: 09.01.2001
(51) Int. Cl.: G01G 19/08, G01G 19/12

(54) **Lastwagen**
Truck body
Camion

(30) Priorität: 07.04.2000 DE 20006480 U
(43) Veröffentlichungstag der Anmeldung: 10.10.2001
(73) Patentinhaber: FAUN Umwelttechnik GmbH & Co., 86167 Augsburg (DE)
(72) Erfinder: Kirchhoff, Johannes, Dr., 58638 Iserlohn (DE)
(74) Vertreter: Laufhütte, Dieter

(56) Entgegenhaltungen:
- FR-A- 2 554 923
- GB-A- 2 043 921
- US-A- 4 977 784
- US-A- 5 366 033

## Beschreibung

Die vorliegende Erfindung betrifft Lastwägen mit einem Chassis-Rahmen und einer Erfassungseinrichtung zur Erfassung der Last, mit der der Lastwagen beladen wird nach dem Oberbegriff des Anspruchs 1.

Bei Lastwägen ist es von Bedeutung, die jeweilige Beladung zu erfassen. Beispielsweise soll auf diesem Wege verhindert werden, daß der entsprechende Lastwagen überladen wird. Die bislang verwendeten Erfassungseinrichtungen, mit denen die Beladung der Lastwägen gemessen werden konnte, sind in mehrerlei Hinsicht unbefriedigend und verbesserungsbedürftig.

Aus der FR-A-2 554 923 ist ein Lastwagen nach dem Oberbegriff des Anspruchs 1 bekannt.

Die US 4,977,784 A offenbart eine sogenannte Saitenmessvorrichtung.

Der vorliegenden Erfindung liegt daher die Aufgabe zugrunde, einen verbesserten Lastwagen der eingangs genannten Art zu schaffen, der aus dem Stand der Technik bekannte Nachteile vermeidet. Insbesondere soll er hinsichtlich der Erfassungseinrichtung zur Erfassung der Beladung verbessert werden.

Erfindungsgemäß wird diese Aufgabe bei einem Lastwagen der genannten Art durch die Merkmale des Anspruchs 1 gelöst. Demnach ist die Messeinheit eine Saitenmessvorrichtung, bei der die Saite zwischen zwei beabstandeten Punkten in einer Zone maximaler Zugspannung oder maximalen Schubs am Chassis-Rahmen gespannt ist.

Es wird also unmittelbar am Rahmen die von der jeweiligen Last induzierte Beanspruchung des Rahmens gemessen. Die Beladung des Lastwagens wird mittelbar erfaßt, sie wird aus der mechanischen Beanspruchung des Rahmens bestimmt. Die unmittelbare Messung der mechanischen Beanspruchung des Rahmens bewirkt eine zielgerichtete Überwachung desselben hinsichtlich seiner Festigkeit. Es kann wirkungsvoll verhindert werden, daß der Rahmen über seine Festigkeitsgrenzen hinaus belastet wird. Unabhängig von der jeweiligen Verteilung der Beladung werden die tatsächlich auftretenden Beanspruchungen erfaßt.

Die mechanische Belastung des Chassis-Rahmens kann auf verschiedene Weisen erfaßt werden. In Weiterbildung der Erfindung ist die Meßeinheit derart ausgebildet, daß sie eine Dehnung des Chassis-Rahmens mißt. Durch die Beladung des Lastwagens wird dessen Chassis-Rahmen verformt, so daß die elastische Verformung des Chassis-Rahmens ein Maß für die Beladung des Lastwagens ist. Die Erfassung der induzierten Dehnung des Chassis-Rahmens erlaubt eine einfache und dennoch präzise Erfassung bzw. Bestimmung der Beladung des Lastwagens. Die Meßeinheit kann direkt am Chassis-Rahmen angeordnet sein, um dessen Beanspruchung zu messen. Vorzugsweise ist sie unmittelbar in den Chassis-Rahmen integriert.

Gemäß einer bevorzugten Ausführung der Erfindung ist die Meßeinheit einer Zone maximaler mechanischer Beanspruchung des Chassis-Rahmens zugeordnet, d.h. die mechanische Beanspruchung des Rahmens wird dort gemessen, wo sie maximal ist. Insbesondere ist die Meßeinheit in einer Zone maximaler Zugspannung oder maximalen Schubes am Chassis-Rahmen angeordnet, insbesondere in diesen integriert.

In Weiterbildung der Erfindung sind mehrere Meßeinheiten verschiedenen Abschnitten des Chassis-Rahmens zugeordnet, insbesondere jeweils in Zonen maximaler Spannungen angeordnet. Die von der Beladung des Lastwagens in dessen Chassis-Rahmen induzierten Spannungen werden an mehreren Stellen des Rahmens erfaßt, um unabhängig vom Beladungszustand bzw. der Ladungsverteilung die maximale mechanische Belastung des Chassis-Rahmens zu erfassen.

Die Erfassung der mechanischen Beanspruchung des Chassis-Rahmens kann analog erfolgen, d.h. die entsprechende Meßeinheit kann analog arbeiten.

Gemäß einer bevorzugten Ausführung der Erfindung ist eine digitale Meßeinheit vorgesehen, die die mechanische Belastung des Rahmens digital erfaßt. Hierdurch kann eine präzise und störungsfreie Bestimmung der Beladung des Lastwagens erreicht werden.

In Weiterbildung der Erfindung, insbesondere zur Integration in den Chassisrahmen, ist als direkter Meßaufnehmer eine Saitenmeßvorrichtung vorgesehen, die ein digitales kraftabhängiges Frequenzsignal erzeugt. Eine solche Saitenmeßvorrichtung arbeitet folgendermaßen:

Zwischen zwei beabstandeten Punkten ist eine Saite gespannt. Zwei zur Saite angeordnete Permanentmagnete erzeugen senkrecht zur Saite ein Magnetfeld. Wird nun die Saite von einem Strom durchflossen, wirkt eine elektromagnetische Kraft, die sie auslenkt. Mit Hilfe einer Erregerelektronik kann somit die Saite zur Schwingung angeregt werden. Die Frequenz dieser Schwingung wird bestimmt durch die Zugkraft, die von den beiden Festpunkten auf die Saite ausgeübt wird. Hierbei reichen kleinste durch mechanische Beanspruchungen erzeugte Beabstandungsvergrößerungen der beiden Festpunkte aus, um eine Frequenzänderung zu bewirken, die mit der mechanischen Beanspruchung, die die Verlängerung der Beabstandung zwischen den beiden Saitenfestpunkten erzeugt, in Beziehung gesetzt werden.

Eine derartige Saitenmeßvorrichtung ist als solche bekannt. So zeigen beispielsweise die EP 0 393 159 B1 oder die EP 381 712 B1 Saitenmeßvorrichtungen, auf die bezüglich der konkreten Ausbildung der Saitenmeßvorrichtung Bezug genommen wird. Die spezielle Verwendung der Saitenmeßvorrichtung zur Erfassung der Beladung eines Lastwagens bringt besondere Vorteile mit sich.

Vorzugsweise ist die Meßeinheit bzw. sind die Meßeinheiten derart ausgebildet, daß sie nachträglich am Chassis-Rahmen vorzugsweise von außen her anbringbar sind. Hierdurch kann auch ein bereits bestehender Lastwagen in einfacher Weise nachgerüstet werden, so daß eine Beladungsmessung über die dem Chassis-Rahmen induzierte mechanische Belastung bewerkstelligt werden kann. Gemäß einem weiteren Aspekt der vorliegenden Erfindung findet die beschriebene Messung der mechanischen Belastung des Chassis-Rahmens Verwendung bei Müllwägen. Gerade hier ist durch die ständig wechselnde und sukzessive zunehmende Zuladung eine wirkungsvolle Überwachung und Messung der Beladung von Vorteil. Im Zusammenspiel mit der unmittelbaren Erfassung der Belastung des Chassis-Rahmens kann auch bei unterschiedlichen Belastungszuständen oder Beladungsverteilungen sichergestellt werden, daß ein entsprechender Müllwagen nicht überladen und die jeweils tatsächlich vorliegende Beladung präzise gemessen wird.

Die Erfindung wird nachfolgend anhand eines bevorzugten Ausführungsbeispieles und einer zugehörigen Zeichnung näher erläutert.

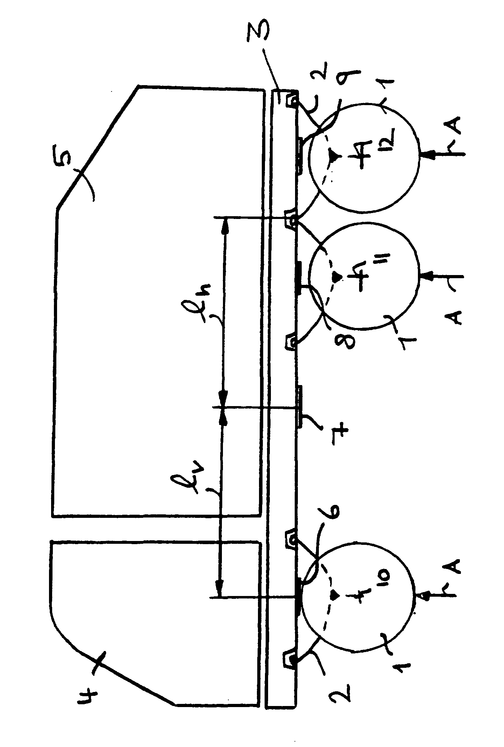

Die einzige Zeichnung zeigt eine schematische Darstellung eines Müllwagens gemäß einer bevorzugten Ausführung der Erfindung in einer Seitenansicht.

Der in der Zeichnung gezeigte Müllwagen ist dreiachsig. Die Räder 1 sind mittels einer Radaufhängung 2, die entsprechende Federelemente aufweist, an dem Chassis-Rahmen 3 angelenkt und abgestützt.

Der Chassis-Rahmen 3 trägt wiederum an seinem vorderen Ende eine Fahrerzelle 4 sowie nach hinten daran anschließend eine Beladungszelle 5, in die der zu transportierende Müll geladen werden kann.

Um die Beladung des Müllwagens zu erfassen, sind mehrere Meßeinheiten 6, 7, 8 und 9 vorgesehen, die die durch die Beladung dem Chassis-Rahmen 3 induzierte Spannung bzw. Dehnung messen. Die Meßeinheiten 6-9 sind voneinander beabstandet und an verschiedenen Stellen des Chassis-Rahmens 3 angeordnet, um die mechanische Belastung des Chassis-Rahmens 3 an unterschiedlichen Abschnitten zu erfassen.

Insbesondere sind die Meßeinheiten 6-9 in Zonen maximaler Spannung an dem Chassis-Rahmen 3 befestigt, um die maximal induzierten Spannungen bzw. Dehnungen zu messen. Die Meßeinheiten 6, 8 und 9 sind auf Höhe der Achsen 10, 11 und 12, d.h. unmittelbar oberhalb der Achsen am Chassis-Rahmen 3 befestigt. Sie liegen damit mittig zwischen den Anlenkpunkten der jeweiligen Radaufhängung 2 am Chassis-Rahmen 3 und damit in Zonen eines lokalen Spannungsmaximums.

Die weitere Meßeinheit 7 ist zwischen den Achsen des Müllwagens angeordnet. Sie ist dabei von den Achsen derart beabstandet, daß sie die maximale Biegespannung des Chassis-Rahmens 3 zwischen den Hinter- und Vorderachsen erfaßt. Wie die Figur zeigt, entspricht der Abstand Iᵥ der Meßeinheit 7 von der Vorderachse 10 in etwa dem Abstand Iₕ der Meßeinheit 7 von dem gemeinsamen Angriffspunkt der Hinterachsen 11 und 12. Der gemeinsame Angriffspunkt der Hinterachsen 11 und 12 ist dabei ein gedachter Punkt, in dem die über die Hinterachsen 11 und 12 aufgenommen Auflagerkräfte ohne resultierendes Moment aufgenommen werden. Wie die Figur zeigt, ist der gemeinsame Auflagerpunkt mittig zwischen den beiden Hinterachsen 11 und 12. Die auf die Räder 1 wirkenden Auflagerkräfte sind mit dem Buchstaben A gekennzeichnet. Für den Fall, daß ebenfalls mehrere Vorderachsen vorgesehen sein sollten, kann der Abstand Iᵥ der mittleren Meßeinheit 7 von den Vorderachsen ebenfalls von deren gemeinsamen, gedachten Auflagerpunkt bestimmt werden.

Es können grundsätzlich verschiedene Meßeinheiten verwendet werden. Im gezeigten Ausführungsbeispiel sind Dehnungsmeßstreifen unmittelbar an der Außenseite des Chassis-Rahmens 3 befestigt.

Die Meßeinheiten sind dabei derart angebracht, daß sie die Dehnung der maximaler Spannung ausgesetzten Faser des Chassis-Rahmens 3 erfassen. Wie die Figur zeigt, sind sie auf der Unterseite des Chassis-Rahmens 3 angeordnet.

Zweckmäßigerweise sind die Meßeinheiten 6, 7, 8 und 9 vom gleichen Typ. Es können allerdings auch Meßeinheiten unterschiedlichen Typs vorgesehen sein, d.h. zum Beispiel können die Meßeinheiten 6, 8 und 9 eine Wiegezelle sein, während die zwischen den Achsen befindliche Meßeinheit 7 ein Dehnungsmeßstreifen ist.

## Patentansprüche

1. Lastwagen mit einem Chassis-Rahmen (3) und einer Erfassungseinrichtung (6, 7, 8, 9) zur Erfassung der Last, mit der der Lastwagen beladen ist, wobei die Erfassungseinrichtung eine Messeinheit zur Messung der mechanischen Beanspruchung des Chassis-Rahmen (3) aufweist,
**dadurch gekennzeichnet,**
**dass** die Messeinheit eine Saitenmessvorrichtung ist, bei der die Saite zwischen zwei beabstandeten Punkten in einer Zone maximaler Zugspannung oder maximalen Schubes am Chassis-Rahmen (3) gespannt ist.

2. Lastwagen nach Anspruch 1, **dadurch gekennzeichnet, dass** die Saite der Saitenmessvorrichtung im Chassis-Rahmen (3) integriert ist.

3. Lastwagen nach Anspruch 1 oder 2, **dadurch gekennzeichnet, dass** eine Mehrzahl von Saitenmessvorrichtungen verschiedenen Abschnitten des Chassis-Rahmens (3) derart zugeordnet ist, dass sie voneinander beabstandet jeweils in Zonen maximaler Spannungen angeordnet sind.

4. Lastwagen nach einem der vorhergehenden Ansprüche, wobei er ein Müllwagen ist.

## Claims

1. Lorry with a chassis frame (3) and a detection device (6, 7, 8, 9) for detecting the load with which the lorry is loaded, the detection device having a measuring unit for measuring the mechanical stress of the chassis frame (3), **characterized in that** the measuring unit is a string measuring device, in which the string is stretched between two spaced points in a zone of maximum tensile stress or maximum shear on the chassis frame (3).

2. Lorry according to Claim 1, **characterized in that** the string of the string measuring device is integrated in the chassis frame (3).

3. Lorry according to Claim 1 or 2, **characterized in that** a plurality of string measuring devices is assigned to different sections of the chassis frame (3) in such a manner that they are arranged spaced apart from one another in each case in zones of maximum stresses.

4. Lorry according to one of the preceding claims, it being a refuse vehicle.

## Revendications

1. Camion comportant un châssis porteur (3) et un dispositif de détection (6, 7, 8, 9) destiné à déterminer la charge transportée par le camion, le dispositif de détection comportant une unité de mesure destinée à mesurer la sollicitation mécanique exercée sur le châssis porteur (3), **caractérisé en ce que** l'unité de mesure est un dispositif de mesure à corde, dans lequel la corde est tendue sur le châssis porteur (3) entre deux poins distants l'un de l'autre dans une zone de contrainte de traction maximale ou de poussée maximale.

2. Camion selon la revendication 1, **caractérisé en ce que** la corde du dispositif de mesure à corde est intégrée dans le châssis porteur (3).

3. Camion selon la revendication 1 ou 2, **caractérisé en ce qu'**une pluralité de dispositifs de mesure à corde sont associés à différentes zones du châssis porteur (3), de telle sorte que lesdits dispositifs de mesure sont agencés à distance les uns des autres dans chacune des zones de contraintes maximales.

4. Camion selon l'une quelconque des revendications précédentes, **caractérisée en ce qu'**il est un camion de collecte des ordures.
